# EUROPÄISCHE PATENTSCHRIFT

(11) **EP 1 623 208 B1**
(45) Veröffentlichungstag und Bekanntmachung des Hinweises auf die Patenterteilung: **21.11.2007**
(21) Anmeldenummer: 04725034.5
(22) Anmeldetag: 01.04.2004
(51) Int. Cl.: G01N 21/03, G02B 5/00, G01N 21/05, G01N 21/55, G01J 3/02

(54) **VORRICHTUNG UND VERFAHREN ZUR OPTISCHEN KOPPLUNG**
OPTICAL COUPLING DEVICE AND METHOD
DISPOSITIF ET PROCEDE DE COUPLAGE OPTIQUE

(30) Priorität: 05.05.2003 DE 10320226
(43) Veröffentlichungstag der Anmeldung: 08.02.2006
(73) Patentinhaber: Santhera Pharmaceuticals (Deutschland) GmbH, 69120 Heidelberg (DE)
(72) Erfinder: DICKOPF, Stefan, 69118 Heidelberg (DE); PERSCHKE, Thomas, 69245 Bammental (DE); NEDIC, Mladen, 67112 Mutterstadt (DE); SCHMIDT, Kristina, 69198 Schriesheim (DE)
(74) Vertreter: HOFFMANN EITLE
(86) Internationale Anmeldenummer: PCT/EP2004/003455
(87) Internationale Veröffentlichungsnummer: WO 2004/099762

(56) Entgegenhaltungen:
- WO-A-01/63256
- DE-A- 2 621 895
- US-A- 4 934 818
- US-A- 5 164 589

## Beschreibung

Die vorliegende Anmeldung betrifft eine Vorrichtung und ein Verfahren zur optischen Kopplung eines ersten optischen Elements und eines zweiten optischen Elements.

Auf dem Gebiet der optischen Messtechnik ist es bekannt zwischen separaten optischen Elementen, wie zum Beispiel einem Strahlführungselement einerseits und einem Probenträger andererseits, Mittel zur Indexanpassung einzusetzen, so dass ein möglichst verlustfreier Übergang der optischen Strahlung vom einen optischen Element zum anderen optischen Element stattfinden kann. Der Begriff "Indexanpassung" bedeutet hierbei die Anpassung des Brechungsindex.

Ein Beispiel eines Messsystems, bei dem solche Indexanpassungsmittel eingesetzt werden ist die SPR-Messung. SPR steht für "Surface Plasmon Resonance", d.h. Oberflächenplasmonenresonanz.

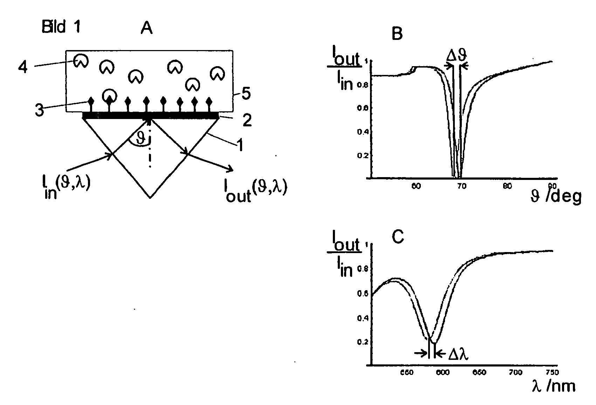

Die SPR-Technik ist ein etabliertes Verfahren zum markierungsfreien Nachweis von Rezeptor-Ligand-Wechselwirkungen. Dies wird anhand Fig. 1A kurz erläutert. Bei SPR wird üblicherweise ein Glassubstrat 1 mit einem dünnen Goldfilm 2 beschichtet und einer der Bindungsspartner 3 wird auf dieser Goldoberfläche chemisch immobilisiert (z.B. werden Proteine mittels einem Gel immobilisiert, oder es werden mittels self assembled monolayers (SAM) kleine Moleküle auf der Oberfläche immobilisiert). Der zweite Bindungsspartner 4 wird in Flüssigkeit 5 gelöster Form, d.h. als Probenflüssigkeit, in Benetzung mit der chemisch modifizierten Goldoberfläche gebracht. Bei Bindung des gelösten Partners an den auf der Oberfläche immobilisierten ändert sich der Brechungsindex in der Flüssigkeitsschicht unmittelbar oberhalb der Goldoberfläche.

Diese Brechungsindexänderung lässt sich mit Hilfe der Plasmonenresonanz detektieren: Durch das Glassubstrat wird Licht eingestrahlt und an der Goldschicht reflektiert. Unter bestimmten physikalischen Randbedingungen (Reflexionswinkel, Polarisationswinkel und Wellenlänge der Strahlung, Brechungsindex von Substrat und Flüssigkeit, Dicke der Goldschicht) wird das Licht jedoch nicht reflektiert, sondern absorbiert. Dann tritt die Plasmonenresonanz auf, d.h. die Lichtenergie wird umgewandelt in eine Elektronen-Ladungsdichtewelle entlang der Grenzschicht Gold-Flüssigkeit. In der Praxis wird nun einer der beiden physikalischen Parameter des Lichtes, Einfallswinkel (Fig. 1B) oder Wellenlänge (Fig. 1C) durchgestimmt, und die Intensität des reflektierten Lichtes in Abhängigkeit dieses Parameters detektiert. Auf diese Art und Weise erhält man ein Reflexionsspektrum, bei dem ein Einbruch der Intensität festzustellen ist (sogenannter SPR-Dip, siehe Fig. 1B und 1C), wenn die Resonanzbedingung erreicht wird. Das Minimum dieses Intensitätseinbruchs verschiebt sich, wenn durch die Bindung des Reaktionspartners der Brechungsindex der Flüssigkeitsschicht oberhalb des Goldes sich ändert. Man kann (z. B. experimentell) belegen, dass diese Verschiebung des Minimums (Δϑ oder Δλ) direkt proportional zur Massenbelegung der gebundenen Moleküle ist.

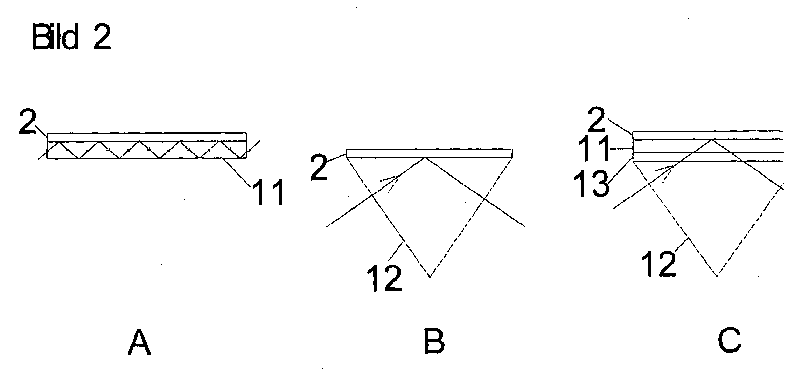

Zur technischen Realisierung dieses Messprozesses benutzt man üblicherweise die sogenannte Kretschmann Geometrie (Fig. 1A). Der Reflexionswinkel, bei der die Resonanz auftritt (der Reflexionswinkel für SPR mit Gold auf Glas und wässrigen Lösungen beträgt ca. 65-70°), liegt jedoch oberhalb des Totalreflexionswinkels für den Glas-Luft Übergang, d.h. bei einem Substrat in Form einer dünnen Glasplatte 11 ist es nicht möglich, das Licht von der Unterseite des Glases einfallen zu lassen, da kein Einfallswinkel existiert, der nach der Lichtbrechung einen für SPR geeigneten Winkel ergäbe. Weiterhin kommt Licht, das unter einem SPR-Winkel an der Goldschicht reflektiert wird, nicht aus dem Substrat heraus, sondern wird über mehrfache Totalreflexion im Substrat geleitet und lässt sich somit nicht mehr ortsaufgelöst detektieren (siehe Fig. 2A). Daher benutzt man in der Kretschmann-Anordnung ein Prisma 12, in dessen Seitenfenster das Licht mit kleinem oder ganz verschwindendem Einfallswinkel eindringen kann, und dann an der Goldschicht 2 unter dem für SPR ausreichend großem Winkel reflektiert wird, um dann aus dem anderen Seitenfenster wieder auszutreten (siehe Fig. 2B).

Da es wirtschaftlich nachteilig ist, für jedes Experiment ein neues Prisma zu benutzen, wird i.d.R. mit dünnen Glassubstraten 11 gearbeitet, die die Gold-Sensoroberfläche 2 tragen und auf ein immer wieder verwendbares Prisma gelegt werden, wobei der Spalt zwischen Prisma und Glassubstrat mit einer Index-Anpassungsschicht 13 gefüllt wird (siehe Fig. 2C).

Hier gibt es mehrere Möglichkeiten die Index-Anpassungsschicht zu verwirklichen:
- ein flüssiges Indexöl zieht in einen dünnen Kapillarspalt, oder
- eine dünne Schicht aus flexiblem Silikonmaterial (index matching rubber), wie es z.B. in WO 97/19375 beschreiben ist.

Beide Methoden haben prinzipielle Nachteile, besonders bei großflächigen Sensorplatten:

Bei der Öl-Methode ist es nur möglich das Öl wieder aus dem Kapillarspalt heraus zu bekommen, wenn man den Kapillarspalt öffnet und einen manuellen Reinigungsvorgang durchführt. Außerdem bilden sich manchmal Luftblasen beim Befüllen des Kapillarspaltes. Auch zum Entfernen dieser Blasen muss der Kapillarspalt wieder geöffnet werden.

Die Methode mit dem Indexgummi ist problematisch bei flächenhaften Substraten, da gerne Luftblasen eingeschlossen werden, selbst wenn das Gummi eine Struktur vorsieht, die beim Anpressen die Luft definiert nach außen bringt. An den Stellen der Blasen gibt es Totalreflexion, die darunter liegende Stelle auf der Sensoroberfläche ist dann nicht sichtbar.

Beim Auftreten einer Blase muss bei der Gummischicht davon ausgegangen werden, dass die Blase mit Unebenheiten zu tun haben muss (Die Gummimatte passt nicht an allen Stellen exakt zwischen Glasplatte und Prisma). Damit muss eine neue Gummimatte mit hoher Anforderung an die Ebenheit/Homogenität benutzt werden. Dies ist sehr nachteilig.

Die oben beschriebenen Probleme sind nicht auf SPR-Messsysteme beschränkt, sondern treten allgemein auf, wenn eine Indexanpassung zwischen zwei optischen Elementen versucht werden soll. Es sei angemerkt, dass im Zusammenhang mit der vorliegenden Beschreibung und den vorliegenden Ansprüchen der Begriff "optisch" als auf jede durch entsprechende Elemente führbare Strahlung bezogen ist, d.h. nicht auf den sichtbaren Bereich des elektromagnetischen Spektrums begrenzt ist.

Aufgabe der vorliegenden Erfindung ist die Schaffung einer verbesserten Vorrichtung und eines verbesserten Verfahrens zur optischen Kopplung zweier getrennter Elemente.

Gelöst wird diese Aufgabe durch eine Vorrichtung mit den Merkmalen des Patentanspruchs 1 und ein Verfahren mit den Merkmalen des Patentanspruchs 12. Bevorzugte Ausführungen sind in den abhängigen Ansprüchen beschrieben.

Gemäß der vorliegenden Erfindung wird mit einer Indexanpassungsflüssigkeit als Indexanpassungsmittel gearbeitet, allerdings nicht unter Verwendung eines Kapillarspalts. Vielmehr sieht die vorliegende Erfindung die Bildung einer Kammer vor, welche durch Strahlungsdurchtrittsflächen eines zu koppelnden ersten und zweiten optischen Elements gebildet wird, sowie eine im Umfang geschlossene, die beiden Strahlungsdurchtrittsflächen verbindende Seitenwand begrenzt wird. Eine Zuleitung zur Zuführung von Indexanpassungsflüssigkeit in die Kammer, sowie eine Ableitung für die Abführung von Indexanpassungsflüssigkeit aus der Kammer sind vorgesehen. Damit stellt die Kammer eine Art von Flusszelle für die Indexanpassungsflüssigkeit (z.B. Indexöl) dar, wobei der Flüssigkeitstransport zumindest nicht dominierend von Kapillarkräften bestimmt wird. Auf diese Weise gelingt eine einfache und zuverlässige Bereitstellung einer optischen Kopplung zwischen dem ersten und zweiten optischen Element, indem über die Zuführung Indexanpassungsflüssigkeit in die Kammer gefüllt wird. Hierbei werden einerseits die bei Kapillarspalten auftretenden Probleme vermieden, da die Kammer so dimensioniert ist, dass die Indexanpassungsflüssigkeit ohne weiteres zwischen der Zuführung und Abführung fließen kann, und es werden die mit Indexanpassungsgummi einhergehenden Probleme vermieden, da eben kein Feststoff als Indexanpassungsmittel gewählt ist. Insbesondere schafft die vorliegende Erfindung den Vorteil einer einfachen Automatisierbarkeit, da die Zu- und Abführung von Indexanpassungsflüssigkeit in die Kammer mittels einer automatischen Steuerung erfolgen kann. Ähnliche Kammern sind beispielsweise aus DE 2621895 oder US 4934818 bekannt. Erfindungsgemäß ist eine Kippeinrichtung vorgesehen, so dass das Gesamtsystem in einen gekippten Zustand gebracht werden kann, in dem der Zuführungspunkt für Indexanpassungsflüssigkeit in die Kammer in Richtung der Schwerkraft gesehen tiefer liegt als ein Ableitungspunkt bzw. Entlüftungspunkt. Auf diese Weise ist eine blasenfreie Befüllung der Kammer besonders einfach, da die Luft- bzw. Gasblasen nach oben steigen und durch die von unten zugeführte Indexanpassungsflüssigkeit durch den höher liegenden Entlüftungspunkt herausgedrückt werden, während in der Indexanpassungsflüssigkeit keine Blasen zurückbleiben.

Nun wird die vorliegende Erfindung ausführlicher unter Bezugnahme auf die begleitenden Zeichnungen beschrieben, in welchen:
- Fig. 1: ein schematisches Diagramm eines Prismas und eines Sensors zeigt, sowie Messkurven, um das Prinzip der Oberflächenplasmonenresonanz zu erläutern;
- Fig. 2: schematische Elemente für SPR-Messungen zeigt;
- Fig. 3A: einzelne Elemente einer erfindungsgemäßen Vorrichtung nach einer ersten Ausführung zeigt;
- Fig.3B: die zusammengesetzten Elemente der Figur 3A zeigt, und den Betrieb gemäß einer bevorzugten Ausführung erläutert;
- Fig. 4A: Elemente einer Anordnung zur Zuführung von Probenflüssigkeit auf eine Sensorfläche des zweiten optischen Elements zeigt;
- Fig. 4B: die zusammengesetzten Elemente der Figur 4A zur Erläuterung eines bevorzugten Betriebsverfahrens zeigt;
- Fig. 5: einen Gesamtmessaufbau mit mehreren Probengefäßen zeigt;
- Fig. 6: schematisch den Strahlungsverlauf zeigt, um dem ersten und zweiten optischen Element Strahlung zuzuführen bzw. von ihnen abzuführen; und
- Fig. 7: eine weitere Ausführung der erfindungsgemäßen Vorrichtung zeigt.

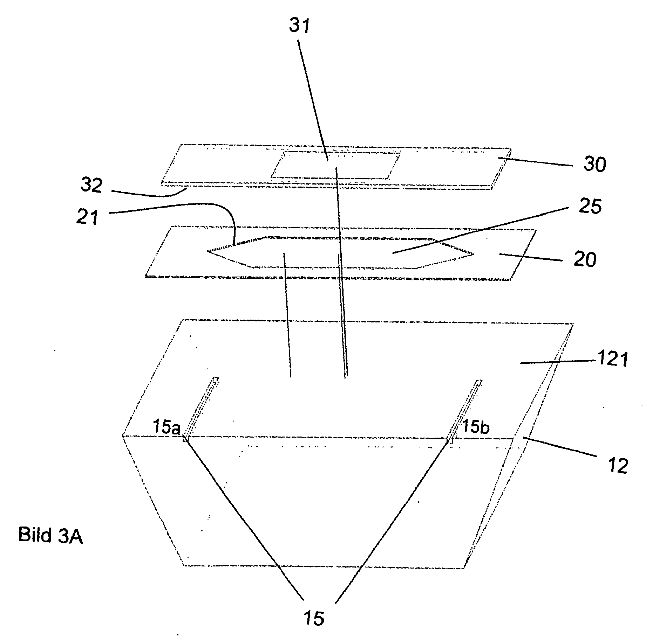

Nun werden ausführliche Beispiele beschrieben. In Figur 3A sind Elemente einer erfindungsgemäßen Vorrichtung gezeigt. Das Bezugszeichen 12 bezeichnet ein erstes optisches Element, welches als Prisma gezeigt ist. Das Bezugszeichen 30 bezeichnet ein zweites optisches Element, welches als Plättchen gezeigt ist. Das erste optische Element 12 hat eine erste Strahlungsdurchtrittsfläche 121, und das zweite optische Element 30 hat eine gegenüberliegende zweite Strahlungsdurchtrittsfläche 32. Die optische Kopplung soll zwischen dem ersten und zweiten optischen Element über die jeweiligen Strahlungsdurchtrittflächen geschehen.

Zwischen dem ersten optischen Element 12 und dem zweiten optischen Element 30 ist ein Zwischenelement 20 vorgesehen, welches eine Ausnehmung 25 besitzt. Die Ausnehmung 25 definiert eine Seitenwand 21 in dem Zwischenstück 20. Ferner sind im ersten optischen Element 12 Kanäle 15 vorgesehen, durch welche Indexanpassungsflüssigkeit bzw. Gas fließen kann.

Gemäß dieser Ausführung werden das Zwischenstücke 20 und das zweite optische Element 30 so auf das erste optische Element 12 gelegt, dass die Ausnehmung 25 eine Kammer bildet, in welcher die Kanäle 15a, 15b eine Zu- bzw. Ableitung bilden. Die im Umfang geschlossene Seitenwand 21, ein durch die Projektion der Seitenwand 21 auf die erste Strahlungsdurchtrittsfläche 121 gebildeter erster Ausschnitt der ersten Strahlungsdurchtrittsfläche 121, und ein durch die Projektion der im Umfang geschlossenen Seitenwand 21 auf die zweite Strahlungsdurchtrittsfläche 32 gebildeter zweiter Ausschnitt der zweiten Strahlungsdurchtrittsfläche 32 bilden eine bis auf die Zu- bzw. Ableitung geschlossene Kammer. Der Begriff "im Umfang geschlossen" bedeutet hierbei, dass die Projektion der Seitenwand eine geschlossene Umfangslinie definiert.

In diese Kammer kann zur Indexanpassung zwischen dem ersten optischen Element 12 und dem zweiten optischen Element 30 Indexanpassungsflüssigkeit gefüllt werden. Hierbei kann die Zu- und Abführung über einen Kanal geschehen, wobei der andere als reine Entlüftung dient, oder es kann ein Kanal als Zuführung und der andere als Abführung für die Indexanpassungsflüssigkeit verwendet werden, um eine Art von Durchflusszelle zu bilden.

Die in der Figur gezeigten Kanäle 15a, 15b können auf jede geeignete Weise in dem ersten optischen Element 12 gebildet werden, zum Beispiel durch Ultraschallbearbeitung, durch Sägen oder Fräsen oder auch mit photolithografischen Mitteln. Die Kanäle 15a, 15b sind zwar vorzugsweise im ersten optischen Element 12 gebildet, wie in Figur 3A gezeigt, sie können jedoch auch einzeln oder gemeinsam im Zwischenelement 20 oder dem zweiten optischen Element 30 gebildet sein. Somit könnte einer oder beide der Kanäle im Zwischenelement 20 gebildet sein und durch die Seitenwand 21 in die Kammer treten.

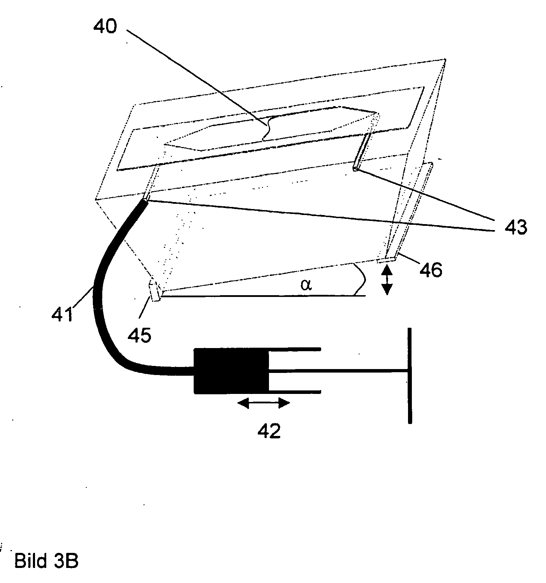

Das Zwischenelement 20 kann aus jedem geeigneten Material bestehen, zum Beispiel aus Glas. Vorzugsweise hat die Ausnehmung 25 des Zwischenelements 20 die in der Figur 3A gezeigte Querschnittsform, nämlich einen rechteckigen Mittelabschnitt und zwei dreieckige Endabschnitte, welche so mit den Kanälen zusammenwirken, dass die Spitzen der dreieckigen Endabschnitte zur Zuleitung 15a bzw. Ableitung 15b gerichtet sind (siehe auch Figur 3B). In anderen Worten, der Querschnitt der Ausnehmung 25 hat vorzugsweise eine Doppeltrapezform.

Die Ausnehmung kann durch jedes geeignete Verfahren erzeugt werden, zum Beispiel durch Laserbearbeitung oder durch Ausstanzung, je nach dem für das Zwischenelement 20 gewählten Werkstoff. Die V-förmigen Spitzen des Doppeltrapezes liegen möglichst exakt auf den Enden der Kanäle 15a, 15b, so dass hier die Indexanpassungsflüssigkeit (zum Beispiel Indexöl) durch den jeweiligen Kanal in die Kammer zwischen dem ersten optischen Element 12 und dem zweiten optischen Element 30 hinein- bzw. hinausfließen kann. Die Dicke des Zwischenelements 20 ist so groß, dass die Kapillarwirkung der begrenzenden Oberflächen (der erste Ausschnitt in der ersten Strahlungsdurchtrittsfläche, der zweite Ausschnitt in der zweiten Strahlungsdurchtrittsfläche und die Seitenwand 21) so klein ist, dass die Indexanpassungsflüssigkeit ohne bedeutenden Widerstand fließen kann bzw. der Flüssigkeitstransport nicht dominierend von Kapillarkräften bestimmt wird.

Das Zwischenelement 20 wird vorzugsweise auf das erste optische Element 12 aufgeklebt, um eine permanente Einheit aus erstem optischen Element und Zwischenelement 20 zu bilden, da auf diese Weise nur einmal eine Justierung der Spitzen des Doppeltrapezes gegenüber den beiden Kanälen 15a, 15b erfolgen muss.

Das zweite optische Element 30, welches vorzugsweise ein Trägerplättchen für eine durch Strahlung zu untersuchende Messprobe ist, ist vorzugsweise abnehmbar auf dem Zwischenelement 20 platziert. Dies kann zum Beispiel durch eine Anordnung mit Federklemmen geschehen.

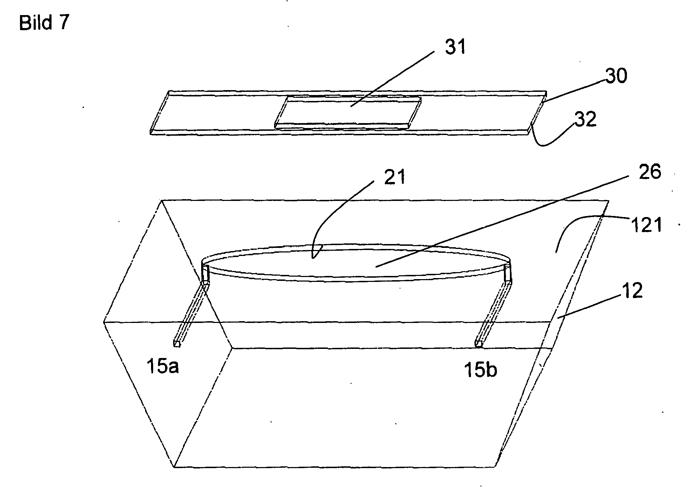

Figur 7 zeigt eine alternative Ausführung zu jener der Figur 3a. In Figur 7 ist wiederum ein erstes optisches Element 12 (zum Beispiel ein Prisma) mit einer ersten Strahlungsdurchtrittsfläche 121 gezeigt, sowie ein zweites optisches Element 30 (zum Beispiel ein Plättchen mit einer Sensorfläche oder Messprobe 31), welches eine zweite Strahlungsdurchtrittsfläche 32 besitzt, die der ersten Strahlungsdurchtrittsfläche 121 gegenüber steht.

Im Beispiel der Figur 7 weist das erste optische Element 12 eine Vertiefung 26 auf. Die Vertiefung besitzt eine Seitenwand 21, wobei der Boden der Vertiefung 26 und die Seitenwand 21 mit der übrigen zum zweiten optischen Element 30 gerichteten Oberfläche des ersten optischen Elements 12 die (Gesamt-) Strahlungsdurchtrittsfläche 121 bilden. In anderen Worten, der Boden der Vertiefung 26 ist ein Teil der Strahlungsdurchtrittsfläche 121, wobei die Strahlungsdurchtrittsfläche 121 damit jedoch auf zwei verschiedenen Ebenen liegt.

Die Kanäle 15a, 15b münden in der Vertiefung 26, so dass wenn das zweite optische Element 30 (vorzugsweise abnehmbar) auf dem ersten optischen Element 12 platziert ist, durch die Vertiefung 26 eine Kammer definiert wird, welche bis auf die Kanäle 15a, 15b geschlossen ist, um Indexanpassungsflüssigkeit aufzunehmen und damit eine optische Kopplung zwischen dem ersten und zweiten optischen Element zu bewirken. In anderen Worten, der durch die Seitenwand 21 definierte Ausschnitt in der Oberfläche des ersten optischen Elements 12 ist wie in der Figur 7 erkennbar kleiner als die Gesamtoberfläche, aber auch der zweite Ausschnitt, welcher durch die Projektion der Seitenwand 21 auf das zweite optische Element 30 definiert ist, ist kleiner als der Flächeninhalt der zweiten Strahlungsdurchtrittsfläche 32 auf dem zweiten optischen Element 30.

Die zu verwendenden Materialien und Herstellungstechniken sind bei dem Beispiel der Figur 7 gleich wie im Beispiel der Figur 3a. Es sei bemerkt, dass die Ausführungen der Figur 3a und Figur 7 auch kombiniert werden können, d.h. dass eine Kammer sowohl durch eine Vertiefung 26 als auch durch eine Ausnehmung 25 in einem Zwischenelement 20 gebildet sein kann, so dass die Kammer jeweils teilweise durch die Vertiefung und teilweise durch die Ausnehmung geschaffen wird.

In Figur 7 ist die Querschnittsform der Vertiefung 26 als oval gezeigt. Die Querschnittsform könnte auch die Doppeltrapezform der Ausnehmung 25 des Zwischenelements 20 der Figur 3A haben, aber ebenso könnte die Ausnehmung 25 der Figur 3a die Ovalform der Vertiefung 256 der Figur 7 haben. Grundsätzlich kann die Querschnittsform der Ausnehmung 25 oder der Vertiefung 26 nach beliebiger Eignung gewählt werden, wobei aber die in Figur 3a gezeigte Doppeltrapezform bevorzugt ist, da dadurch ein besserer Zufluss und Abfluss von Indexanpassungsflüssigkeit gewährleistet ist.

Wie bereits erwähnt, wird das zweite optische Element 30 vorzugsweise abnehmbar aufgesetzt. Es sei bemerkt, dass dadurch gewöhnlich ein kleiner Spalt zwischen dem zweiten optischen Element 30 und der Oberfläche 121 (im Beispiel der Figur 7) oder dem Zwischenelement 20 (im Beispiel der Figur 3a) bestehen wird, wobei aber die Kapillarkräfte in diesem kleinen Spalt verhindern, dass Indexanpassungsflüssigkeit hindurchtritt, so das hierdurch dennoch eine zumindest für die Indexanpassungsflüssigkeit geschlossene Kammer entsteht.

In Figur 3b ist eine Anordnung gezeigt, bei der die in Figur 3a gezeigten einzelnen Elemente zusammengefügt sind, und zusätzlich eine Zuführvorrichtung 41, 42, 43 gezeigt ist, um Indexanpassungsflüssigkeit zuzuführen, sowie Elemente 45, 46, welche eine Kippeinrichtung darstellen, mit der die Gesamtanordndung um einen Winkel α gekippt werden können, so dass der Zuleitungspunkt für Indexanpassungsflüssigkeit in die Kammer in Richtung der Schwerkraft gesehen tiefer als der Ableitungspunkt liegt. Die Zuführvorrichtung kann zum Beispiel durch eine hin und her bewegbare Spritze 42, einen Schlauch 41 und eine oder zwei Kanülen 43 gebildet sein, wobei die Kanülen 43 in die Kanäle 15a, 15b (siehe Figur 3a) eingeführt sind.

Die Elemente 45 und 46 sind nur schematisch abgebildet, wobei 45 einen Anschlag darstellt und 46 ein Element zum Anheben des ersten optischen Elements 12, z.B. durch einen (nicht abgebildeten) Elektromotor. Die Kippung der Anordnung um einen Winkel α sorgt dafür, dass sich aufgrund der Schwerkraft eine horizontale Flüssigkeitsfront 40 ausbildet, und die Luft (bzw. das in der Kammer befindliche Gas) definiert durch den weiter obenliegenden Kanal 15b nach außen entweichen kann.

Die Indexanpassungsflüssigkeit kann am Ende der Messung wieder entnommen werden, indem sie in die Spritze 42 zurückgezogen wird, oder indem Luft durch die Kammer gepresst wird und damit die Indexanpassungsflüssigkeit aus dem Auslasskanal 15b herausgedrückt wird. Der gesamte Prozess der Füllung und Leerung mit Indexanpassungsflüssigkeit lässt sich leicht mit motorisieren Spritzenantrieben automatisieren.

Wie bereits weiter oben erwähnt, ist das zweite optische Element 30 vorzugsweise ein Träger, welcher ein oder mehr Sensorfelder 31 umfasst. Obwohl die Figuren der besseren Anschaulichkeit halber nur ein Sensorfeld 31 zeigen, kann das zweite optische Element 30 selbstverständlich auch mehrere solche Felder tragen. Diese Felder können zum Beispiel SPR-Sensorfelder sein, d.h. Sensorfelder, die auf der zweiten Strahlungsdurchtrittsfläche 32 abgewandten Seite des optischen Elements 30 vorgesehen sind. Auf dieser abgewandten Seite ist eine dünne SPR-fähige Schicht (Z.B. Gold) aufgebracht, auf welcher wiederum bestimmte Liganden immobilisiert werden. Eine Messung geschieht durch Beleuchtung der Sensorfelder aus dem Volumen des Plättchens 30.

Hierbei ist die Anordnung der ein oder mehr Sensorfelder 31, die Dimensionierung der Vertiefung 26 oder Ausnehmung 25 und die Strahlungszuführung zum ersten optischen Element vorzugsweise so, dass die ein oder mehr Sensorfelder 31 in ihrer gesamten Fläche aus dem Volumen des zweiten optischen Elements 30 beleuchtet werden und das aus diesem Bereich reflektierte Licht vollständig aus dem Prisma austreten kann. Mit anderen Worten sollte die Ausnehmung 25 so groß dimensioniert sein, dass sie nicht als Blende für das Sensorfeld 31 wirksam wird.

Es sei angemerkt, dass die Zuführvorrichtung 41, 42, 43, und die Kippeinrichtung 45, 46 auch bei Ausführung der Figur 7 verwendet werden können, um die gleichen Wirkungen zu erzielen. Durch die oben beschriebene Anordnungen gelingt eine definierte, blasenfreie und bequem automatisierbare Befüllung von Indexanpassungsflüssigkeit in eine Kammer, welche das erste und zweite optische Element verbindet. Dies ist besonders vorteilhaft in Zusammenhang mit der Verwendung von Sensorplatten als zweitem optischen Element, welche abnehmbar auf der Anordnung angebracht werden, da nach dem Anbringen der Sensorplatte bequem Indexanpassungsflüssigkeit in die Kammer gefüllt werden kann und nach der Messung wieder herausgenommen werden kann, worauf die Sensorplatte entfernt werden kann und z.B. durch Aufbringen einer weiteren Sensorplatte mit einer neuen Messung begonnen werden kann.

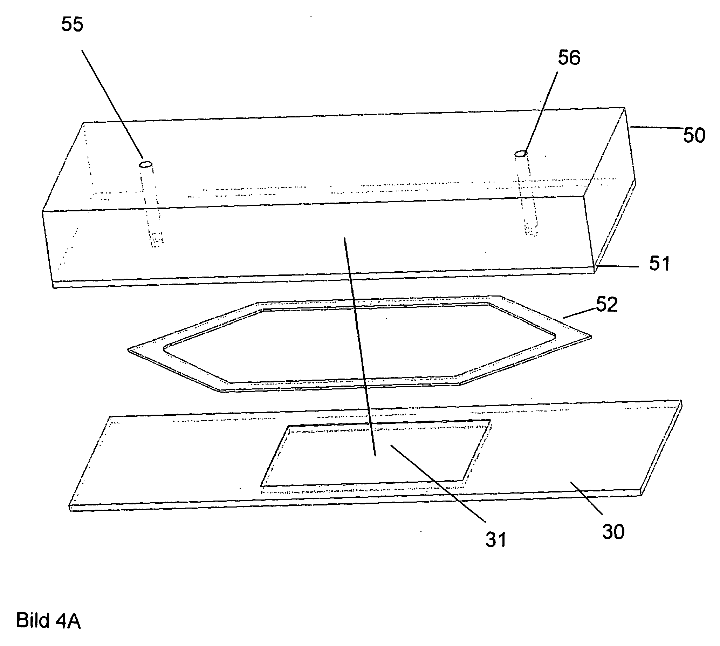

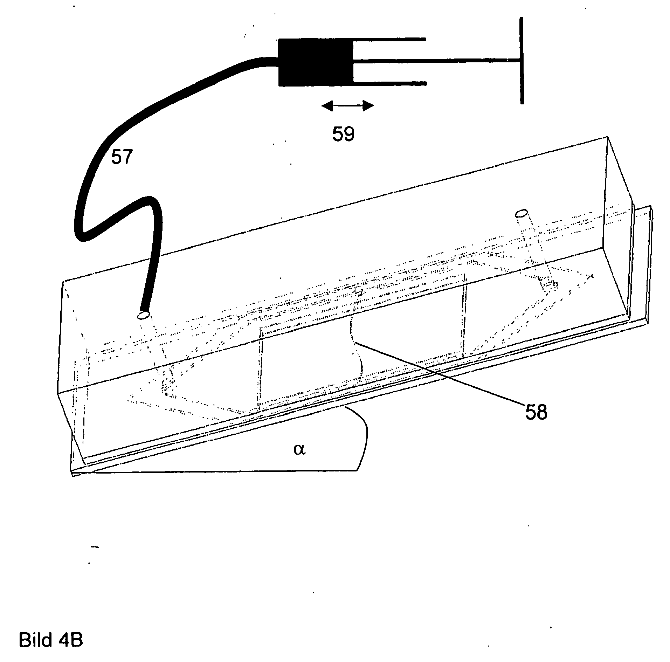

In dem Fall, dass als zweites optisches Element eine Sensorplatte verwendet wird, z.B. eine SPR-Sensorplatte, die Sensorfelder auf der der zweiten Strahlungsdurchtrittsfläche 32 abgewandten Seite hat, werden vorzugsweise weitere Elemente vorgesehen, wie in Figur 4A und 4B gezeigt. Auf die mit den ein oder mehr Sensorfeldern 31 versehene Seite der Platte 30 werden ein thermostatisierbarer Block 50 mit einem ersten Fluidführungskanal 55 und einem zweiten Fluidführungskanal 56, sowie eine Dichtung 52 vorgesehen. Die Dichtung 52 umgibt die ein oder mehr Sensorfelder 31 und wirkt so mit dem thermostatisierbaren Block 50 zusammen, dass ein Raum um die ein oder mehr Sensorfelder entsteht, in welchen Probenflüssigkeit, welche für die Interaktion mit den ein oder mehr Sensorfeldern 31 bestimmt ist, durch den ersten Fluidführungskanal 55 und/oder den zweiten Fluidführungskanal 56 zu- oder abgeführt werden kann. Hierbei stellt der gebildete Raum eine Art Durchflusszelle für Probenflüssigkeit dar.

Wie in Figur 4B gezeigt, ist der Einsatz dieses Systems besonders im Zusammenwirken mit der bereits beschriebenen Kippvorrichtung bevorzugt, da dann der Zuführungspunkt für Probenflüssigkeit in Richtung der Schwerkraft gesehen tiefer gesetzt werden kann als der Abführpunkt bzw. Entlüftungspunkt, um ein blasenfreies Zuführen von Probenflüssigkeit zu gestatten.

Der thermostatisierbare Block 50 kann zum Beispiel ein Metallblock sein, mit einer inerten Beschichtung 51. Die Thermostatisierung des Metallblocks kann entweder durch ein Peltierelement oder durch zusätzliche Bohrungen im Metallblock und einem Umlaufthermostaten erfolgen. Die Dichtung 52, welche vorzugsweise einen doppeltrapezförmigen Querschnitt hat, umrandet die ein oder mehr Sensorfelder 31 auf der Platte 30. Der Metallblock besitzt Bohrungen 55 und 56 als Fluidführungskanäle. Diese Bohrungen sind auf die V-förmigen Ecken oberhalb der Dichtung 52 abgestimmt. Die Beschichtung 51 kann auf jede geeignete Weise erfolgen, zum Beispiel mit PTFE, oder sie kann als ein dünnes Glasplättchen realisiert werden, das auf den Metallblock aufgeklebt wird und an den Stellen der Bohrungen 55 und 56 ebenfalls Durchgangslöcher besitzt.

Die Dicke der Dichtung 52 definiert die Schichtdicke des entstehenden Raums, der nach oben durch den Metallblock und nach unten durch die Sensorplatte 30 begrenzt wird. Über eine Schlauchleitung 57 und Spritze 59 wird Probenflüssigkeit in die Bohrung 55 eingebracht. Wie bereits beschrieben, sorgt der Neigungs- bzw. Kippwinkel α dafür, dass sich eine horizontale Flüssigkeitsfront 58 in der Flusszelle ausbildet und somit keine Blasen gebildet werden. Die verdrängte Luft entweicht aus dem Auslass 56, der somit als Entlüftungsverbindung eingerichtet ist. Die Dichtung ist vorzugsweise so dimensioniert, dass keine wesentlichen Kapillarkräfte auftreten, damit der Fluss der Probenflüssigkeit in dem entstehenden Raum nicht wesentlich behindert wird, und somit ein rascher Flüssigkeitstransport möglich ist.

Die Entleerung des Raums ist durch Zurückziehen der Flüssigkeit in die Spritze 59 möglich, oder indem Luft durch den Zuführungskanal 55 gedrückt wird, um die Probenflüssigkeit aus dem zweiten Führungskanal 56 herauszudrücken. Ein Herausdrücken einer bestimmten Probenflüssigkeit kann auch durch Zuführen einer anderen Probenflüssigkeit bzw. einer bestimmten Spülflüssigkeit (z.B. reines Wasser) bewerkstelligt werden.

Die Kombination der Anordnungen nach Figur 3 oder 7 mit der Anordnung nach Figur 4 erlaubt eine besonders bevorzugte Realisierung einer Messapparatur, insbesondere einer SPR-Messapparatur. Hierbei kann sowohl die Indexanpassungsflüssigkeit als auch die unterschiedlichen Probenflüssigkeiten mit Hilfe von automatisierten Spritzenantrieben bewegt werden.

Eine schematische Gesamtmessanordnung ist in Bild 5 gezeigt. Die Anordnung ist dafür ausgelegt, dass in sequentieller Folge mehrere unterschiedliche Probenflüssigkeiten über die ein oder mehr Sensorfelder 31 gespült werden können. Zum Beispiel kann dies zunächst ein Referenzpuffer sein, dann eine Probenflüssigkeit, danach wieder ein Referenzpuffer, eine Probenflüssigkeit usw., wobei für jede Flüssigkeit eine Messung mittels Aufnahme eines Spektrums (z.B. eines SPR-Spektrums) zur Charakterisierung der Wechselwirkung zwischen der jeweiligen Probenflüssigkeit und den oder mehr Sensorfeldern durchgeführt werden.

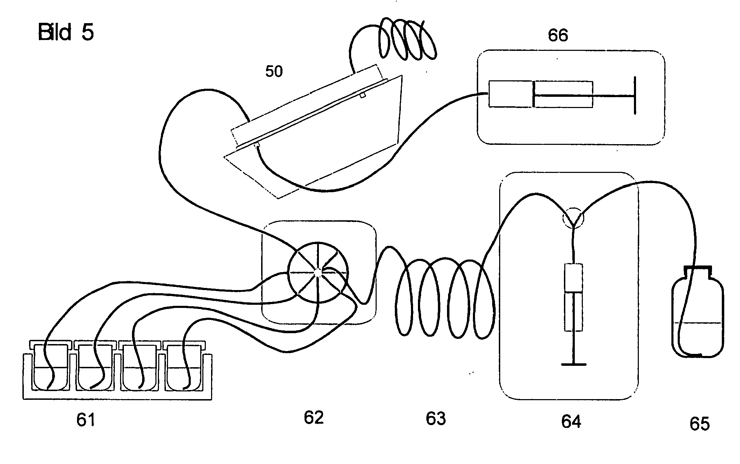

Im schematischen Messaufbau der Figur 5 werden zum Zwecke der Automatisierung Spritzenantriebe mit einem Dreiwegeventil 64 (auch Diluter genannt) und ein Multiventil 62 benutzt. Weiterhin sind ein Behälter mit Systemflüssigkeit 65, ein Schlauchreservoir 62 und Probengefäße 61 vorgesehen. Durch Umschalten des Dreiwegeventils 64 oder des Multiventils 62 wird zunächst zu Beginn der Messung über das Dreiwegeventil 64 Systemflüssigkeit in das Schlauchreservoir 63 und die Schläuche zu den Proben 61 gefüllt. Danach werden die Schläuche in die Probengefäße 61 eingehängt. Nun kann die erste Probenflüssigkeit in das Schlauchreservoir aufgezogen werden und dann in den über den ein oder mehr Sensorfelder 31 gebildeten Raum eingebracht werden. Nach erfolgter Messung kann die Flüssigkeit wieder aus dem Raum zurückgezogen werden und die zweite Probenflüssigkeit kann eingebracht werden, um die nächste Messung zu ermöglichen. Alternativ kann auch die erste Flüssigkeit durch die Zuführung der zweiten Probenflüssigkeit aus dem Auslass verdrängt werden.

Die Befüllung der Kammer für Indexanpassungsflüssigkeit erfolgt mit einer weiteren Spritzenpumpe 66.

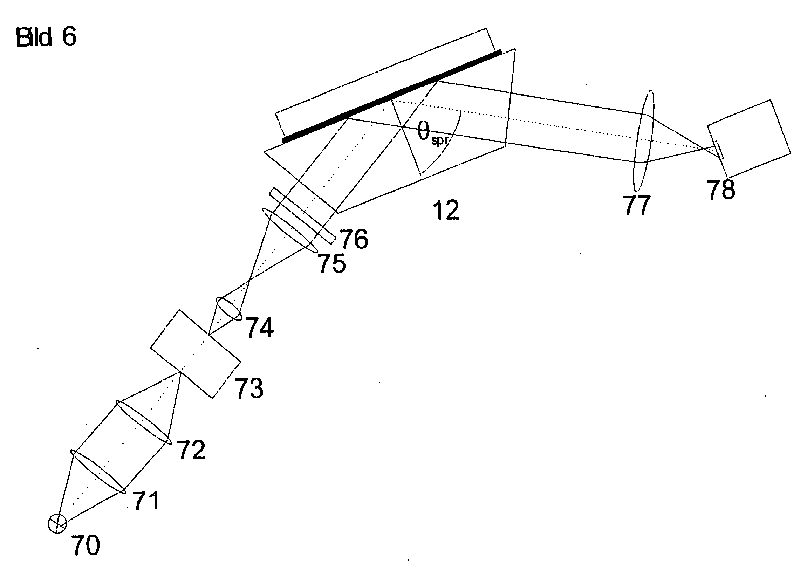

Wie bereits oben erwähnt, wird die erfindungsgemäße Vorrichtung vorzugsweise für SPR-Messungen verwendet. Unter Bezugnahme auf Figur 6 wird der optische Aufbau für solche Messungen gezeigt.

Fig. 6 zeigt einen optischen Aufbau, der es ermöglicht mit der oben beschriebenen Einrichtung, bestehend aus Thermostatisierblock, Sensorplatte und Prisma, eine Brechungsänderung in einer Flüssigkeitsschicht oberhalb der Goldoberfläche - etwa hervorgerufen durch die Bindung von einem Partner in Lösung an den anderen an der Oberfläche immobilisierten Partner - zu detektieren. Der Aufbau entspricht weitgehend einer in WO 01/63256 A1 beschriebenen Anordnung.

Der Aufbau dient zur Messung der wellenlängenabhängigen Oberflächenplasmonenresonanz in Form von Reflexionsspektren.

Dazu wird das weiße Licht einer Lampe 70 mit einer Optik 71 kollimiert und mit einer Optik 72 in den Monochromator 73 eingekoppelt.

Das aus dem Monochromator unter einem Konus austretende Licht wird über die Optiken 74 und 75 in ein Lichtbündel transformiert, das vom Querschnitt ausreichend groß ausgelegt ist, um das aktive Feld 31 auf der Platte 30 vollständig auszuleuchten.

Nach Durchtritt durch einen Polarisator 76 ist das Licht p-polarisiert, d.h. der Feldvektor des Lichtes schwingt parallel zur Einfallsebene, eine Voraussetzung zur Beobachtung der SPR. In dem bis jetzt beschriebenen Beleuchtungsstrahlengang können auch Lichtwellenleiter oder Faltspiegel eingesetzt werden, z.B. zwischen 71 und 72 oder zwischen 73 und 74, um einen praktischen Aufbau der Messeinrichtung zu vereinfachen.

Das kollimierte Licht tritt durch den linken Schenkel des Prismas 12 ein, es wird dann an der Goldschicht des Sensors reflektiert und tritt durch den rechten Schenkel 12 des Prismas wieder aus. Durch eine Optik 77 wird die Sensoroberfläche auf einen CCD-Detektor 78 (oder z.B. einen InGaAs Detektor) abgebildet. Da die Abbildung der Sensoroberfläche unter dem Winkel θₛₚᵣ erfolgen soll, ist es bevorzugt die Detektorfläche nicht senkrecht zur optischen Achse, sondern geneigt dazu auszurichten. Um eine scharfe Abbildung von der gesamten Sensoroberfläche zu erhalten, sollte der Neigungswinkel der Scheimpflug-Bedingung entsprechen.

Die allgemeinen Aspekte der Oberflächenplasmonenresonanz wurden bereits in der Einleitung beschrieben, so dass eine Wiederholung an dieser Stelle nicht notwendig ist.

Obwohl die vorliegende Erfindung unter Bezugnahme auf Oberflächenplasmonenresonanz als bevorzugte Anwendung beschrieben wurde, ist die Erfindung nicht hierauf beschränkt. Vielmehr kann sie zur optischen Kopplung von beliebigen optischen Elementen eingesetzt werden. Auch dann wenn eine Anwendung für die Kopplung von Sensorplatten als zweitem optischen Element vorgesehen ist, ist die Anwendung nicht auf Oberflächenplasmonenresonanz beschränkt, sondern kann bei jedem Messprinzip eingesetzt werden, bei dem eine Beleuchtung von Proben bzw. Sensorflächen auf dem zweiten optischen Element von Interesse ist.

## Patentansprüche

1. Vorrichtung zur optischen Kopplung eines ersten optischen Elements (12) und eines zweiten optischen Elements (11; 30) für die Durchführung einer Oberflächenplasmonenresonanz-Messung, umfassend:
ein erstes optisches Element (12) mit einer ersten Strahlungsdurchtrittsfläche (121);
ein zweites optisches Element (11; 30) mit einer zweiten Strahlungsdurchtrittsfläche (32), die der ersten Strahlungsdurchtrittsfläche (121) gegenübersteht;
eine Kammer, welche durch die erste und zweite Strahlungsdurchtrittsfläche (121, 32), sowie eine im Umfang geschlossene, die erste und zweite Strahlungsdurchtrittsfläche (121, 32) verbindende Seitenwand (21) begrenzt wird, wobei die im Umfang geschlossene Seitenwand (21) einen ersten Ausschnitt in der ersten Strahlungsdurchtrittsfläche und einen zweiten Ausschnitt in der zweiten Strahlungsdurchtrittsfläche definiert, der Flächeninhalt des ersten Ausschnitts kleiner als der Flächeninhalt der ersten Strahlungsdurchtrittsfläche (121) ist, und der Flächeninhalt des zweiten Ausschnitts kleiner als der Flächeninhalt der zweiten Strahlungsdurchtrittsfläche (32) ist;
eine Zuleitung (15a) zur Kammer für die Zuführung von Indexanpassungsflüssigkeit;
eine Ableitung (15b) aus der Kammer für die Abführung von Indexanpassungsflüssigkeit oder Gas aus der Kammer; und
eine Kippeinrichtung (45, 46), welche so ausgebildet ist, dass die Vorrichtung in einen gekippten Zustand kippbar ist, bei welchem die Zuleitung (15a) in Richtung der Schwerkraft gesehen tiefer als die Ableitung (15b) liegt, und eine Zuführvorrichtung (41, 42, 43), welche der Zuleitung (15a) Indexanpassungsflüssigkeit zuführt.

2. Vorrichtung nach Anspruch 1, **dadurch gekennzeichnet, dass** die Zuleitung (15a) und Ableitung (15b) als Kanäle in dem ersten optischen Element (12) ausgebildet sind.

3. Vorrichtung nach Anspruch 1 oder 2, **dadurch gekennzeichnet, dass** die Kammer ganz oder teilweise durch eine Vertiefung in dem ersten optischen Element (12) gebildet ist.

4. Vorrichtung nach einem der vorangehenden Ansprüche, **dadurch gekennzeichnet, dass** die Kammer ganz oder teilweise durch eine Ausnehmung (25) in einem Zwischenelement (20) gebildet ist, welches während der optischen Kopplung zwischen dem ersten und zweiten optischen Element (12, 30) liegt.

5. Vorrichtung nach einem der vorangehenden Ansprüche, **dadurch gekennzeichnet, dass** die Kammer in einem Querschnitt einen rechteckigen Mittelabschnitt und zwei dreieckige Endabschnitte aufweist, wobei die Spitzen der dreieckigen Endabschnitte zu der Zuleitung (15a) bzw. Ableitung (15b) gerichtet sind.

6. Vorrichtung nach einem der vorangehenden Ansprüche, **dadurch gekennzeichnet, dass** das zweite optische Element ein oder mehr Sensorfelder (31) umfasst.

7. Vorrichtung nach Anspruch 6, **dadurch gekennzeichnet, dass** das zweite optische Element (11; 30) eine Oberflächenplasmonenresonanz-Sensorplatte ist, und die ein oder mehr Sensorfelder (31) Oberflächenplasmonenresonanz-Sensorfelder sind.

8. Vorrichtung nach Anspruch 6 oder 7, **dadurch gekennzeichnet, dass** sich die ein oder mehr Sensorfelder (31) auf der der zweiten Strahlungsdurchtrittsfläche (32) abgewandten Seite des zweiten optischen Elements (11; 30) befinden.

9. Vorrichtung nach einem der Ansprüche 6 bis 8, **gekennzeichnet durch** eine Strahlungszuführeinrichtung (70-76), welche angeordnet ist, um so Strahlung in das erste optische Element (12) einzukoppeln, dass die ein oder mehr Sensorfelder 31 in ihrer gesamten Fläche aus dem Volumen des zweiten optischen Elements 30 beleuchtet sind.

10. Vorrichtung nach Anspruch 8 oder 9, **gekennzeichnet durch** einen thermostatisierbaren Block (50) mit einem ersten Fluidführungskanal (55) und einem zweiten Fluidführungskanal (56), und eine Dichtung (52), wobei die Dichtung (52) die ein oder mehr Sensorfelder (31) umgibt und so mit dem thermostatisierbaren Block (50) zusammenwirkt, dass ein Raum um die ein oder mehr Sensorfelder (32) entsteht, in welchen Probenflüssigkeit durch den ersten Fluidführungskanal (55) und/oder den zweiten Fluidführungskanal (56) zu- oder abgeführt werden kann.

11. Vorrichtung nach Anspruch 10, **gekennzeichnet durch** eine Einrichtung (57, 59) zum Zu- und Abführen von Probenflüssigkeit, welche mit dem ersten Fluidführungskanal (55) verbunden ist, und wobei der zweite Fluidführungskanal (56) als Entlüftungsverbindung eingerichtet ist.

12. Verfahren zur optischen Kopplung eines ersten optischen Elements (12) mit einer ersten Strahlungsdurchtrittsfläche (121) und eines zweiten optischen Elements (11; 30) mit einer zweiten Strahlungsdurchtrittsfläche (32), die der ersten Strahlungsdurchtrittsfläche (121) gegenübersteht, wobei das Verfahren für die Durchführung einer Oberflächenplasmonenresonanz-Messung umfasst:
Bilden einer Kammer, welche durch die erste und zweite Strahlungsdurchtrittsfläche (121, 32), sowie eine im Umfang geschlossene, die erste und zweite Strahlungsdurchtrittsfläche (121, 32) verbindende Seitenwand (21) begrenzt wird, wobei die im Umfang geschlossene Seitenwand (21) einen ersten Ausschnitt in der ersten Strahlungsdurchtrittsfläche und einen zweiten Ausschnitt in der zweiten Strahlungsdurchtrittsfläche definiert, der Flächeninhalt des ersten Ausschnitts kleiner als der Flächeninhalt der ersten Strahlungsdurchtrittsfläche (121) ist, und der Flächeninhalt des zweiten Ausschnitts kleiner als der Flächeninhalt der zweiten Strahlungsdurchtrittsfläche (32) ist;
Bringen der Anordnung aus erstem optischen Element (12), zweitem optischen Element (30) und Kammer in einen gekippten Zustand, in dem ein Indexanpassungsflüssigkeits-Zuleitungspunkt in der Kammer in Richtung der Schwerkraft gesehen tiefer als ein Indexanpassungsflüssigkeits-Ableitungspunkt liegt; und
Füllen von Indexanpassungsflüssigkeit in die Kammer.

13. Verfahren nach Anspruch 12, **dadurch gekennzeichnet, dass** die Kammer ganz oder teilweise durch eine Ausnehmung (25) in einem Zwischenelement (20) gebildet wird, welches zwischen das erste und zweite optische Element (12, 30) eingesetzt wird.

14. Verfahren nach Anspruch 12 oder 13, **dadurch gekennzeichnet, dass** das zweite optische Element ein oder mehr Sensorfelder (31) umfasst.

15. Verfahren nach Anspruch 14, **dadurch gekennzeichnet, dass** das zweite optische Element (11; 30) eine Oberflächenplasmonenresonanz-Sensorplatte ist, und die ein oder mehr Sensorfelder (31) Oberflächenplasmonenresonanz-Sensorfelder sind.

16. Verfahren nach Anspruch 14 oder 15, **dadurch gekennzeichnet, dass** sich die ein oder mehr Sensorfelder (31) auf der der zweiten Strahlungsdurchtrittsfläche (32) abgewandten Seite des zweiten optischen Elements (11; 30) befinden.

17. Verfahren nach Anspruch 16, **gekennzeichnet durch** das Vorsehen eines thermostatisierbaren Blocks (50) mit einem ersten Fluidführungskanal (55) und einem zweiten Fluidführungskanal (56), und das Vorsehen einer Dichtung (52), sodass die Dichtung (50) die ein oder mehr Sensorfelder (31) umgibt und so mit dem thermostatisierbaren Block (50) zusammenwirkt, dass ein Raum um die ein oder mehr Sensorfelder (31) entsteht, in welchen Probenflüssigkeit **durch** den ersten Fluidführungskanal (55) und/oder den zweiten Fluidführungskanal (56) zu- oder abgeführt wird.

18. Verfahren nach Anspruch 17, **gekennzeichnet durch** Zu- und Abführen von Probenflüssigkeit über den ersten Fluidführungskanal (55) und Entlüften über den zweiten Fluidführungskanal (56).

19. Verfahren nach Anspruch 17 oder 18, **dadurch gekennzeichnet, dass** vor der Zuführung von Probenflüssigkeit in den Raum, die Anordnung aus erstem optischen Element (12), zweitem optischen Element (30), Kammer, thermostatisierbaren Block (50), Dichtung (52) und Raum in einen gekippten Zustand gebracht wird, in dem ein Probensflüssigkeits-Zuleitungspunkt in dem Raum in Richtung der Schwerkraft gesehen tiefer als ein Probenflüssigkeits-Ableitungspunkt oder Entlüftungspunkt liegt.

20. Verfahren nach einem der Ansprüche 14 bis 19, **dadurch gekennzeichnet, dass** die ein oder mehr Sensorfelder 31 in ihrer gesamten Fläche aus dem Volumen des zweiten optischen Elements 30 beleuchtet werden.

## Claims

1. Device for optical coupling of a first optical element (12) and a second optical element (11; 30) for carrying out a surface plasmon resonance measurement comprising:
a first optical element (12) having a first radiation passage surface (121);
a second optical element (11; 30) having a second radiation passage surface (32), which is opposite the first radiation passage surface (121);
a chamber which is defined by the first and second radiation passage surface (121, 32) and a peripherally closed side wall (21) joining the first and second radiation passage surface (121, 32), wherein the peripherally closed side wall (21) defines a first cutout in the first radiation passage surface and a second cutout in the second radiation passage surface, the area of the first cutout being less than the area of the first radiation passage surface (121), and the area of the second cutout being less than the area of the second radiation passage surface (32);
a supply line (15a) to the chamber for supplying index-adjusting liquid;
a discharge line (15b) from the chamber for removing index-adjusting liquid or gas from the chamber; and
a tilting device (45, 46) which is designed so that the device can be tilted into a tilted state, in which the supply line (15a), seen in the direction of gravitational force, lies lower than the discharge line (15b), and a supply device (41, 42,43) which supplies index-adjusting liquid to the supply line (15a).

2. Device according to claim 1, **characterised in that** the supply line (15a) and discharge line (15b) are designed as channels in the first optical element (12).

3. Device according to claim 1 or 2, **characterised in that** the chamber is formed completely or partly by a depression in the first optical element (12).

4. Device according to one of the preceding claims, **characterised in that** the chamber is formed completely or partly by a recess (25) in an intermediate element (20) which lies between the first and second optical element (12, 30) during optical coupling.

5. Device according to one of the preceding claims, **characterised in that** the chamber in cross-section has a rectangular central section and two triangular end sections, wherein the tips of the triangular end sections are directed towards the supply line (15a) or discharge line (15b).

6. Device according to one of the preceding claims, **characterised in that** the second optical element comprises one or more sensor fields (31).

7. Device according to claim 6, **characterised in that** the second optical element (11; 30) is a surface plasmon resonance sensor plate, and the one or more sensor fields (31) are surface plasmon resonance sensor fields.

8. Device according to claim 6 or 7, **characterised in that** the one or more sensor fields (31) are situated on the side of the second optical element (11; 30) facing away from the second radiation passage surface (32).

9. Device according to one of claims 6 to 8, **characterised by** a radiation supply device (70-76) which is arranged to couple radiation into the first optical element (12) so that the one or more sensor fields 31 are illuminated on their entire surface from the volume of the second optical element 30.

10. Device according to claim 8 or 9, **characterised by** a block (50), which can be thermostatted, having a first fluid-guiding channel (55) and a second fluid-guiding channel (56), and a seal (52), wherein the seal (52) surrounds the one or more sensor fields (31) and cooperates with the block (50) which can be thermostatted so that a gap is produced around the one or more sensor fields (32), in which sample liquid may be supplied or removed through the first fluid-guiding channel (55) and/or the second fluid-guiding channel (56).

11. Device according to claim 10, **characterised by** a device (57, 59) for supplying and removing sample liquid, which is joined to the first fluid-guiding channel (55), and wherein the second fluid-guiding channel (56) is installed as a venting connection.

12. Process for optical coupling of a first optical element (12) to a first radiation passage surface (121) and a second optical element (11; 30) to a second radiation passage surface (32) which is opposite the first radiation passage surface (121), wherein the process for carrying out a surface plasmon resonance measurement comprises:
forming a chamber which is defined by the first and second radiation passage surface (121, 32) and a peripherally closed side wall (21) joining the first and second radiation passage surface (121, 32), wherein the peripherally closed side wall (21) defines a first cutout in the first radiation passage surface and a second cutout in the second radiation passage surface, the area of the first cutout being less than the area of the first radiation passage surface (121), and the area of the second cutout being less than the area of the second radiation passage surface (32);
bringing the arrangement comprising first optical element (12), second optical element (30) and chamber into a tilted state, in which an index-adjusting liquid supply line point in the chamber, seen in the direction of gravitational force, lies lower than an index-adjusting liquid discharge line point; and
adding index-adjusting liquid to the chamber.

13. Process according to claim 12, **characterised in that** the chamber is formed completely or partly by a recess (25) in an intermediate element (20), which is inserted between the first and second optical element (12, 30).

14. Process according to claim 12 or 13, **characterised in that** the second optical element comprises one or more sensor fields (31).

15. Process according to claim 14, **characterised in that** the second optical element (11; 30) is a surface plasmon resonance sensor plate, and the one or more sensor fields (31) are surface plasmon resonance sensor fields.

16. Process according to claim 14 or 15, **characterised in that** the one or more sensor fields (31) are situated on the side of the second optical element (11; 30) facing away from the second radiation passage surface (32).

17. Process according to claim 16, **characterised by** the provision of a block (50), which can be thermostatted, having a first fluid-guiding channel (55) and a second fluid-guiding channel (56), and the provision of a seal (52), so that the seal (50) surrounds the one or more sensor fields (31) and cooperates with the block (50) which can be thermostatted so that a gap is produced around the one or more sensor fields (31), in which sample liquid is supplied or removed through the first fluid-guiding channel (55) and/or the second fluid-guiding channel (56).

18. Process according to claim 17, **characterised by** supplying and removing sample liquid via the first fluid-guiding channel (55) and venting via the second fluid-guiding channel (56).

19. Process according to claim 17 or 18, **characterised in that** before supplying sample liquid to the gap, the arrangement comprising first optical element (12), second optical element (30), chamber, block (50) which can be thermostatted, seal (52) and gap is brought into a tilted state, in which a sample liquid supply line point in the gap, seen in the direction of gravitational force, lies lower than a sample liquid discharge line point or venting point.

20. Process according to one of claims 14 to 19, **characterised in that** the one or more sensor fields 31 are illuminated on their entire surface from the volume of the second optical element 30.

## Revendications

1. Dispositif pour le couplage optique d'un premier élément optique (12) et d'un second élément optique (11 ; 30) pour l'exécution d'une mesure de résonance des plasmons de surface, comportant :
un premier élément optique (12) comprenant une première surface de traversée du rayonnement (121) ;
un second élément optique (11 ; 30) comprenant une seconde surface de traversée du rayonnement (32) qui est placée à l'opposé de la première surface de traversée du rayonnement (121) ;
une chambre qui est limitée par la première et la seconde surface de traversée du rayonnement (121, 32) ainsi que par une paroi latérale (21) fermée dans la périphérie et qui relie la première et la seconde surface de traversée du rayonnement (121, 32), sachant que la paroi latérale (21) fermée dans la périphérie définit une première zone découpée dans la première surface de traversée du rayonnement et une seconde zone découpée dans la seconde surface de traversée du rayonnement, que la superficie de la première zone découpée est inférieure à la superficie de la première surface de traversée du rayonnement (121) et que la superficie de la seconde zone découpée est inférieure à la superficie de la seconde surface de traversée du rayonnement (32) ;
une conduite d'apport (15a) arrivant vers la chambre pour l'apport du liquide d'ajustement d'index;
une conduite d'évacuation (15b) partant de la chambre pour l'évacuation du liquide d'ajustement d'index ou du gaz depuis la chambre ; et
un dispositif de basculement (45, 46) qui est réalisé de telle sorte que le dispositif peut être basculé jusque dans un état basculé dans lequel la conduite d'apport (15a) est placée plus en bas que la conduite d'évacuation (15b) lorsqu'on regarde dans la direction de la force de gravité, et un dispositif d'alimentation (41, 42, 43) qui apporte le liquide d'ajustement d'index à la conduite d'apport (15a).

2. Dispositif selon la revendication 1, **caractérisé en ce que** la conduite d'apport (15a) et la conduite d'évacuation (15b) sont réalisées comme canaux dans le premier élément optique (12).

3. Dispositif selon l'une ou l'autre des revendications 1 et 2, **caractérisé en ce que** la chambre est formée complètement ou partiellement par un renfoncement dans le premier élément optique (12).

4. Dispositif selon l'une des revendications précédentes, **caractérisé en ce que** la chambre est formée complètement ou partiellement par un évidement (25) dans un élément intermédiaire (20) qui est disposé entre le premier et le second élément optique (12, 30) pendant le couplage optique.

5. Dispositif selon l'une des revendications précédentes, **caractérisé en ce que** la chambre présente un tronçon médian rectangulaire et deux tronçons terminaux triangulaires dans une section transversale, sachant que les pointes des tronçons terminaux triangulaires sont dirigées vers la conduite d'apport (15a) et vers la conduite d'évacuation (15b), respectivement.

6. Dispositif selon l'une des revendications précédentes, **caractérisé en ce que** le second élément optique comporte un ou plus de champ(s) de capteurs (31).

7. Dispositif selon la revendication 6, **caractérisé en ce que** le second élément optique (11; 30) est une plaque de capteurs de résonance des plasmons de surface et **en ce que** le un ou plus de champ (s) de capteurs (31) est (sont) des champs de capteurs de résonance des plasmons de surface.

8. Dispositif selon l'une ou l'autre des revendications 6 et 7, **caractérisé en ce que** le un ou plus de champ(s) de capteurs (31) se trouve (trouvent) sur le côté détourné de la seconde surface de traversée du rayonnement (32) du second élément optique (11 ; 30).

9. Dispositif selon l'une des revendications 6 à 8, **caractérisé par** un dispositif d'apport de rayonnement (70 - 76) qui est agencé pour coupler le rayonnement dans le premier élément optique (12) de telle sorte que le un ou plus de champ(s) de capteurs (31) est (sont) éclairé(s) dans sa (leur) surface globale à partir du volume du second élément optique (30).

10. Dispositif selon l'une ou l'autre des revendications 8 et 9, **caractérisé par** un bloc pouvant être thermostatisé (50) comprenant un premier canal de guidage de fluide (55) et un second canal de guidage de fluide (56), et un joint d'étanchéité (52), sachant que le joint d'étanchéité (52) entoure le un ou plus de champ(s) de capteurs (31) et coopère avec le bloc pouvant être thermostatisé (50) de telle sorte qu'un espace est généré autour du un ou plus champ(s) de capteurs (31), dans lequel du liquide d'échantillon peut être amené ou évacué par le premier canal de guidage de fluide (55) et/ou par le second canal de guidage de fluide (56).

11. Dispositif selon la revendication 10, **caractérisé par** un dispositif (57, 59) pour amener et évacuer du liquide d'échantillon, lequel est relié avec le premier canal de guidage de fluide (55), et sachant que le second canal de guidage de fluide (56) est mis au point comme liaison de purge.

12. Procédé pour le couplage optique d'un premier élément optique (12) comprenant une première surface de traversée du rayonnement (121) et d'un second élément optique (11 ; 30) comprenant une seconde surface de traversée du rayonnement (32) qui est placée à l'opposé de la première surface de traversée du rayonnement (121), sachant que le procédé, afin d'exécuter une mesure de résonance des plasmons de surface, comporte :
la formation d'une chambre qui est limitée par la première et la seconde surface de traversée du rayonnement (121, 32) ainsi que par une paroi latérale (21) fermée dans la périphérie et qui relie la première et la seconde surface de traversée du rayonnement (121, 32), sachant que la paroi latérale (21) fermée dans la périphérie définit une première zone découpée dans la première surface de traversée du rayonnement et une seconde zone découpée dans la seconde surface de traversée du rayonnement, que la superficie de la première zone découpée est inférieure à la superficie de la première surface de traversée du rayonnement (121) et que la superficie de la seconde zone découpée est inférieure à la superficie de la seconde surface de traversée du rayonnement (32);
l'amenée de l'agencement constitué du premier élément optique (12), du second élément optique (30) et de la chambre jusque dans un état basculé dans lequel un point de conduite d'apport du liquide d'ajustement d'index dans la chambre est placé plus en bas qu'un point de conduite d'évacuation du liquide d'ajustement d'index lorsqu'on regarde dans la direction de la force de gravité ; et
le remplissage du liquide d'ajustement d'index dans la chambre.

13. Procédé selon la revendication 12, **caractérisé en ce que** la chambre est formée complètement ou partiellement par un évidement (25) dans un élément intermédiaire (20) qui est mis en place entre le premier et le second élément optique (12, 30).

14. Procédé selon l'une ou l'autre des revendications 12 et 13, **caractérisé en ce que** le second élément optique comporte un ou plus de champ(s) de capteurs (31).

15. Procédé selon la revendication 14, **caractérisé en ce que** le second élément optique (11 ; 30) est une plaque de capteurs de résonance des plasmons de surface et **en ce que** le un ou plus de champ(s) de capteurs (31) est (sont) un (des) champ(s) de capteurs de résonance des plasmons de surface.

16. Procédé selon l'une ou l'autre des revendications 14 et 15, **caractérisé en ce que** le un ou plus de champ(s) de capteurs (31) se trouve (trouvent) sur le côté détourné de la seconde surface de traversée du rayonnement (32) du second élément optique (11 ; 30).

17. Procédé selon la revendication 16, **caractérisé par** la prévoyance d'un un bloc pouvant être thermostatisé (50) comprenant un premier canal de guidage de fluide (55) et un second canal de guidage de fluide (56), et par la prévoyance d'un joint d'étanchéité (52), de telle sorte que le joint d'étanchéité (52), qui entoure le un ou plus de champ(s) de capteurs (31), coopère avec le bloc pouvant être thermostatisé (50) de telle sorte qu'un espace est généré autour du un ou plus champ(s) de capteurs (31), dans lequel du liquide d'échantillon peut être amené ou évacué par le premier canal de guidage de fluide (55) et/ou par le second canal de guidage de fluide (56).

18. Procédé selon la revendication 17, **caractérisé par** 1'apport et l'évacuation du liquide d'échantillon par l'intermédiaire du premier canal de guidage de fluide (55) et par la purge par l'intermédiaire du second canal de guidage de fluide (56).

19. Procédé selon l'une ou l'autre des revendications 17 et 18, **caractérisé en ce que**, avant l'apport du liquide d'échantillon dans l'espace, l'agencement constitué du premier élément optique (12), du second élément optique (30), de la chambre, du bloc pouvant être thermostatisé (50), du joint d'étanchéité (52) et de l'espace, est amené jusque dans un état basculé dans lequel un point de conduite d'apport du liquide d'échantillon dans l'espace est placé plus en bas qu'un point de conduite d'évacuation du liquide d'échantillon ou qu'un point de purge, lorsqu'on regarde dans la direction de la force de gravité.

20. Procédé selon l'une des revendications 14 à 19, **caractérisé en ce que** le un ou plus de champ(s) de capteurs (31) est (sont) éclairé(s) dans sa (leur) surface globale à partir du volume du second élément optique (30).
